# EUROPEAN PATENT APPLICATION

(11) **EP 4 391 126 A1**
(43) Date of publication of application: **26.06.2024**
(21) Application number: 22307043.4
(22) Date of filing: 24.12.2022
(51) Int. Cl.: H01M 8/248, H01M 8/2425, H01M 8/2432, H01M 8/2457, H01M 8/12

(54) **COMPRESSION DEVICE FOR ELECTROCHEMICAL CELLS**

(71) Applicant: Genvia, 34535 Beziers Cedex (FR); Services Pétroliers Schlumberger, 75007 Paris (FR); Schlumberger Technology B.V., 2514 JG The Hague (NL); Commissariat à l'énergie atomique et aux énergies alternatives, 75015 Paris (FR)
(72) Inventor: Salvadori Velu, Sophie, Clamart (FR); Prost, Jérôme, Clamart (FR); Delcombel, Grégory, Clamart (FR); Martinez, Charley, Clamart (FR); Tantolin, Christian, Grenoble (FR)
(74) Representative: IPAZ

(57) **Abstract**

The invention relates to a system comprising:
- a thermal enclosure (120);
- at least one stack (100) comprising at least one electrochemical cell (101), the at least one stack being (100) inside the thermal enclosure (120);
- at least one compression device (118) for applying a compressive force to each respective stack (100), the compression device (188) positioned through an opening of a wall of the thermal enclosure (120) and comprising a first part outside the thermal enclosure (120) and a second part inside the thermal enclosure (120);
- at least one sensor (112) for sensing the compression force applied to each respective stack (100), the at least one sensor (112) being attached to the first part of the respective compression device (118);
- optionally, one or more thermal protection features located along each respective compression device (118), between each respective sensor (112) and stack (100).

## Description

### Technical field

The present invention relates to the field of electrochemical cells, especially SOECs and SOFCs, particularly in the context of high temperature water electrolysis for the production of hydrogen.

### Technical background

The principle of water electrolysis is to break down water molecules into oxygen and hydrogen. The reaction is given by the equation: H₂O→ H₂ + 1/2 O₂.

This reaction can be separated in two partial reactions:
H₂O +2e⁻ → H₂ +O²⁻ at the cathode;
O²⁻ → ½ O₂ +2e⁻ at the anode.

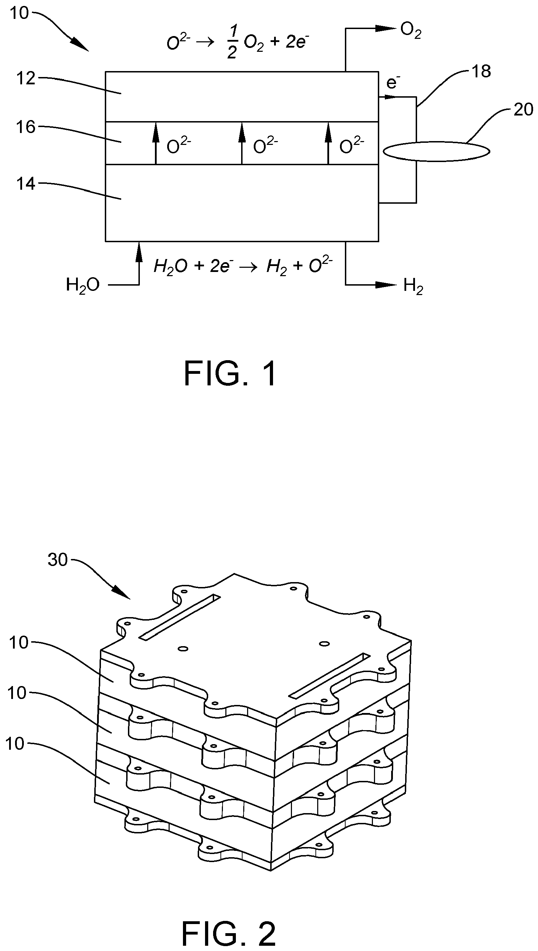

FIG. 1 shows a solid oxide electrolysis cell (SOEC) in which the reaction can be carried out. The water flow goes into the cathode 14 and the water molecules are broken down. The oxygen atoms become oxide ions which pass through the electrolyte 16 to the anode 12 where there is a reduction, the electrons go to the electrical circuit 18 and oxygen in the form of O₂ is collected out of the cell 10. H₂ stays on the cathode 14 side and is collected through a manifold where it can be stored or used. This reaction is made possible thanks to a potential difference between the two sides of the cell 10 applied by a power source 20. As can be seen in FIG. 2, the cells 10 generally have a planar shape, which makes it possible to form a stack 30 comprising a plurality of cells 10 electrically connected in series.

The cells within the stack are pressed together to improve electrical conductivity and to reduce contact resistance between the cells.

The efficiency of the system is important for industrialization and mass production purposes. It has been found that the SOEC efficiency is optimal in a temperature range from approximately 500 to 1000°C, preferably from approximately 650 to 850°C. This is because it is more advantageous to electrolyze vapor water (steam) than liquid water, and because part of the energy required for the reaction can be brought in the form of heat rather than electric power. This implies that the stack of cells needs to be placed in an oven. In this context, it is particularly challenging to properly press the stack and monitor this compression at such high operating temperature range. In particular, sensors for monitoring stack compression cannot usually operate in the temperature range in which an SOEC is used.

A solid oxide fuel cell (SOFC) is operated in a reverse manner relative to an SOEC; namely, the cell is fed with hydrogen and oxygen and produces electrical power. The technical requirements and constraints of SOFCs are generally similar to those of SOECs.

Prior art documents US 9812729, US 2017/0140233, US 8877399, US 6835486, JP 5188755, JP 5283634, US 6797425, US 9559378, US 2019/0088974, EP 3679620 and EP 3707296 disclose various systems comprising an electrochemical cell stack provided with a compression device.

### Summary of the invention

The invention relates to the following items:
Item 1. A system comprising:
   - a thermal enclosure;
   - at least one stack comprising at least one electrochemical cell, the at least one stack being inside the thermal enclosure;
   - at least one compression device for applying a compressive force to each respective stack, the compression device positioned through an opening of a wall of the thermal enclosure and comprising a first part outside the thermal enclosure and a second part inside the thermal enclosure;
   - at least one sensor for sensing the compression force applied to each respective stack, the at least one sensor being attached to the first part of the respective compression device;
   - optionally, one or more thermal protection features located along each respective compression device, between each respective sensor and stack.
Item 2. The system according to item 1, wherein the compression device comprises:
   - a mechanical pusher;
   - a biasing member configured for biasing the mechanical pusher towards the stack;
   - a housing positioned through the thermal enclosure and containing the mechanical pusher and the biasing member;
   - optionally, a nut positioned outside the thermal enclosure and mounted on a proximal end of the housing, configured for adjusting the biasing exerted by the biasing member on the mechanical pusher.
Item 3. The system according to item 2, wherein at least a portion of the mechanical pusher is made of a ceramic material; and/or wherein the mechanical pusher comprises a first portion closer to the stack and a second portion farther from the stack, the second portion having a lower thermal conductivity than the first portion, wherein preferably the second portion is made of a ceramic material and the first portion is made of a metal.
Item 4. The system according to item 2 or 3, wherein one or more ventilation holes are provided in the housing outside the thermal enclosure.
Item 5. The system according to any one of items 2 to 4, wherein the compression device comprises a cover sleeve fixed around the housing outside of the thermal enclosure, the cover sleeve comprising a heat sink preferably in the form of a plurality of fins, wherein, optionally, the cover sleeve comprises ventilation holes aligned with corresponding ventilation holes provided in the housing.
Item 6. The system according to any one of items 2 to 5, wherein the nut comprises ventilation holes.
Item 7. The system according to any one of items 2 to 6, wherein the compression device comprises a heat breaker ring around the housing and optionally within the cover sleeve, if present; the heat breaker ring being preferably made of a ceramic material, the heat breaker ring being positioned preferably in a circumferential groove on the housing, distal to the biasing member.
Item 8. The system according to any one of items 2 to 7, wherein the housing comprises a distal part surrounding the mechanical pusher and a proximal part surrounding the biasing member, the compression device preferably comprising at least one sealing ring positioned at the proximal end of the distal part of the housing.
Item 9. The system according to any one of items 2 to 8, wherein the compression device is mounted to a compression plate at a distal end of the mechanical pusher, the compression plate being configured to transfer and distribute the compressive force from the mechanical pusher to the stack.
Item 10. The system according to item 9, wherein the compression device is further mounted to a pulling plate, the pulling plate comprising a hole for passage of the compression device and an anchoring piece positioned in the hole and around the housing and fixed thereto, the system optionally further comprising a heat breaker ring between the housing and the anchoring piece.
Item 11. The system according to any one of items 1 to 10, wherein the system comprises ceramic wool in the opening of the thermal enclosure around the compression device.
Item 12. The system according to any one of items 1 to 11, wherein the stack comprises a plurality of electrochemical cells along a stacking direction, and wherein the compressive force is applied along the stacking direction.
Item 13. A method for carrying out an electrochemical reaction in the system of any one of items 1 to 12, the method comprising:
   - applying a compressive force to the stack using the compression device;
   - monitoring the compressive force using the sensor;
   - if necessary, adjusting the compressive force.
Item 14. The method of item 13, wherein the stack is at an average temperature from 500 to 1000°C, preferably from 650 to 850°C, and the sensor is at a temperature of less than 200°C, preferably less than 150°C.
Item 15. The method of item 13 or 14, for the generation of hydrogen by water electrolysis or the generation of electricity by hydrogen oxidation and oxygen reduction.
Item 16. A compression device for applying a compressive force to at least one stack comprising at least one electrochemical cell, comprising:
   - a housing configured to be fixedly mounted relative to the stack, extending along a main axis;
   - a mechanical pusher slidably arranged in the housing;
   - a biasing member configured for biasing the mechanical pusher towards the stack;
   - at least one sensor for sensing the compression force applied to the stack, the at least one sensor being attached to the housing;
   - optionally, one or more thermal protection features located along the housing and/or the mechanical pusher.
Item 17. The compression device of item 16, wherein the housing includes a first proximal end and a second distal end relative to the main axis, wherein the mechanical pusher is configured to protrude from the housing at the distal end, and the sensor and the biasing member are arranged in a proximal portion, wherein at least one thermal protection is arranged between the distal end and the biasing member.
Item 18. The compression device of item 16 or 17, comprising a nut mounted on the proximal end of the housing, configured for adjusting the biasing exerted by the biasing member on the mechanical pusher; wherein, optionally, the nut comprises ventilation holes.
Item 19. The compression device according to item 16 or 17 or 18, wherein at least a portion of the mechanical pusher is made of a ceramic material; and/or wherein the mechanical pusher comprises a first distal portion and a second proximal portion, the second proximal portion having a lower thermal conductivity than the first distal portion, wherein preferably the second proximal portion is made of a ceramic material and the first distal portion is made of a metal.
Item 20. The compression device according to any one of items 16 to 19, wherein one or more ventilation holes are provided in the housing.
Item 21. The compression device according to any one of items 16 to 20, comprising a cover sleeve fixed around the housing, the cover sleeve comprising a heat sink preferably in the form of a plurality of fins, wherein, optionally, the cover sleeve comprises ventilation holes aligned with corresponding ventilation holes provided in the housing.
Item 22. The compression device according to any one of items 16 to 21, comprising a heat breaker ring around the housing and optionally within the cover sleeve, if present; the heat breaker ring being preferably made of a ceramic material, the heat breaker ring being positioned preferably in a circumferential groove on the housing, distal to the biasing member.
Item 23. The compression device according to any one of items 16 to 22, wherein the housing comprises a distal part surrounding the mechanical pusher and a proximal part surrounding the biasing member, the compression device preferably comprising at least one sealing ring positioned at the proximal end of the distal part of the housing.
Item 24. The compression device according to any one of items 16 to 23, which is configured to be mounted to a compression plate at a distal end of the mechanical pusher, the compression plate being configured to transfer and distribute the compressive force from the mechanical pusher to the stack.
Item 25. The compression device according to item 24, wherein the compression device is further configured to be mounted to a pulling plate, the pulling plate comprising a hole for passage of the compression device and an anchoring piece positioned in the hole and around the housing and fixed thereto, the compression device optionally further comprising a heat breaker ring between the housing and the anchoring piece.
Item 26. A system comprising at least one stack comprising at least one electrochemical cell and a compression device for applying a compressive force to the at least one stack, wherein the compression device is according to any one of items 16 to 25.
Item 27. The system of item 26, further comprising a thermal enclosure, wherein the at least one stack is inside the thermal enclosure, the compression device is positioned through an opening of a wall of the thermal enclosure and comprises a first part outside the thermal enclosure and a second part inside the thermal enclosure, and the at least one sensor, and preferably the biasing member, is attached to the first part of the compression device.
Item 28. The system according to item 27, wherein the system comprises ceramic wool in the opening of the thermal enclosure around the compression device.
Item 29. The system according to any one of items 26 to 28, wherein the stack comprises a plurality of electrochemical cells along a stacking direction, and wherein the compressive force is applied along the stacking direction.
Item 30. A method for carrying out an electrochemical reaction in the system of any one of items 26 to 29, the method comprising:
   - applying a compressive force to the stack using the compression device;
   - monitoring the compressive force using the sensor;
   - if necessary, adjusting the compressive force.
Item 31. The method of item 30, wherein the stack is at an average temperature from 500 to 1000°C, preferably from 650 to 850°C, and the sensor is at a temperature of less than 200°C, preferably less than 150°C.
Item 32. The method of item 30 or 31, for the generation of hydrogen by water electrolysis or the generation of electricity by hydrogen oxidation and oxygen reduction.

The present invention provides a compression device for compressing a stack of electrochemical cells within a thermal enclosure, as well as a sensor for sensing the compression force, located outside the thermal enclosure. One or more thermal protection features may be located along the compression device and/or between the sensor and the inside of the thermal enclosure. The one or more thermal protection features allow the sensor to operate at a relatively low temperature, the sensor being thus protected and isolated from the heat of the thermal enclosure. Therefore, compression is provided to the stack and the compression can be adequately monitored. The system may include a combination of components of high and low thermal conductivity in a high temperature environment, thereby ensuring optimal mechanical and thermal protection functions. Consequently, it is possible to monitor the compressive force applied to the stack while also ensuring protection of the components of the system that may become easily damaged when exposed to high temperatures, such as the sensor.

### Brief description of the drawings

Non-limiting examples will now be described in reference to the accompanying drawings, where:
FIG. 1 shows an example of water electrolysis process in a solid oxide electrolysis cell (SOEC);
FIG. 2 shows an example of a stack comprising a number of electrochemical cells;
FIG. 3 shows an example of a system comprising four compression devices associated with respective stacks, according to an embodiment, wherein the thermal enclosure has not been depicted for better clarity;
FIG. 4 is a partial view of the system of FIG. 3 including the thermal enclosure;
FIG. 5A and FIG. 5B show an example of the compression device according to an embodiment (exterior view and interior view of the compression device respectively);
FIG. 6 shows an example of cooling by air in the compression device according to an embodiment;
FIG. 7 shows a detail of the compression device according to an embodiment;
FIG. 8A and FIG. 8B show details of the compression device according to an embodiment (biasing member and mechanical pusher without the housing);
FIG. 9A (exterior perspective view) and FIG. 9B (longitudinal cross-sectional view) show details of the compression device according to an embodiment (in particular of ventilation holes provided in the housing);
FIG. 10A (perspective cross-sectional view) and FIG. 10B (exterior perspective view) show a proximal part of the compression device (including the nut and the sensor) according to an embodiment;
FIG. 11 shows an example of the full compression device (perspective cross-sectional view) according to an embodiment;
FIG. 12 shows an example of the mechanical pusher (exterior perspective view) according to an embodiment;
FIG.13A shows an example of the compression device connected to the stack (perspective cross-sectional view), according to an embodiment; FIG. 13B and FIG. 13C each show respective details of FIG. 13A.

### Detailed description

The invention will now be described in detail without limitation in the following description.

### Overview of the system

It is provided a system for carrying out an electrochemical process at high temperature. The system may in particular be a water electrolysis system for producing hydrogen, or a fuel cell system for producing electrical power. The system may be in particular a High Temperature Electrolysis (HTE) system, or a High Temperature Steam Electrolysis (HTSE) system.

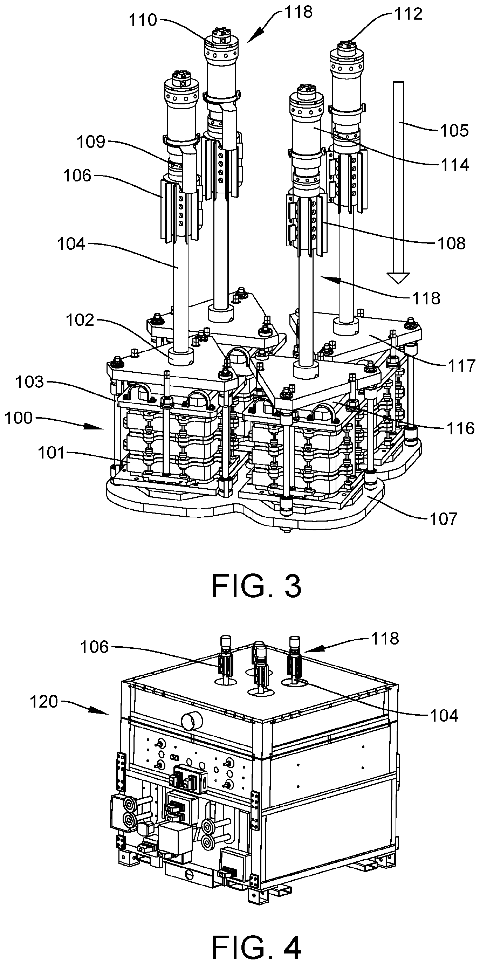

Making reference for example to FIG. 3 and FIG. 4, the system comprises a thermal enclosure or hotbox (*e.g*. oven) 120. The thermal enclosure 120 may comprise one or more heating elements; it may be an industrial oven; it may be capable of heating one or more electrolytic stacks and capable of operating at high temperatures, ranging for example from 500 to 1000°C or from 650 to 850°C, for example operating at a temperature of approximately 800°C.

The materials of components of the system may be selected for their mechanical properties and thermal properties, according to their location in the system and their function. Components of the system may be able to sustain a high temperature environment without experiencing significant changes to their properties.

The system comprises at least one stack 100 comprising at least one electrochemical cell 101. The stacks 100 are inside the thermal enclosure 120. Each electrochemical cell 101 may comprise an electrolyte and two electrodes. Each electrochemical cell 101 may in particular be an electrolytic cell, i.e. a cell configured for electrolysis, preferably water electrolysis. The electrochemical cells 101 may preferably be SOEC cells. Additionally or alternatively, the electrolytic cells may be SOFC cells.

Each stack 100 may comprise multiple electrochemical cells 101. The stack 100 may comprise a stacking or piling of electrochemical cells 101 along a stacking direction. Each cell may be a planar cell. The respective stacks 100 may comprise the same number of cells or a different number of cells. Each stack 100 may be associated with electrical circuitry, as well as with fluid feeding and fluid collecting elements.

When multiple stacks 100 are present in the thermal enclosure 120, they may preferably be placed side by side as shown in FIG. 3, i.e. the layers of the cells 101 of the respective stacks 100 may be substantially aligned or parallel.

The system comprises at least one compression device 118 for applying a compressive force to each stack 100, wherein the force has a component along the stacking direction, and is preferably parallel to the stacking direction. The compression device 118 may maintain the stack 100 in a compressed state allowing a good electrical and/or thermal contact between the various layers (i.e. of stacked cells) of the stack. The compression device 118 may maintain a compressive force on the stack 100 to keep the cells 101 compressed so as to allow the passage of electric current, enable a good electrical contact between the cells, enable the passage of fluids through the stack and to avoid gas leaks.

The compression device 118 may apply a compressive force to the stack 100 in a direction perpendicular to the planar surface of the cells 101.

There can be a single compression device 118 per stack 100, as illustrated herein. Alternatively, there can be more than one compression devices per stack.

Each compression device 118 is positioned through an opening of a wall of the thermal enclosure 120 as shown on FIG. 4 and comprises a first part outside (i.e. protruding out of) the thermal enclosure 120 and a second part inside (i.e. inserted in) the thermal enclosure 120.

The system comprises a sensor 112 for sensing the compression force applied to the stack 100. The sensor 112 is attached to the first part of the compression device 118. The sensor 112 may have an operating temperature lower than that of the thermal enclosure 120.

The system comprises one or more thermal protection features located along the compression device 118 and between the sensor 112 and the at least one stack 100. At least one of the thermal protection features may be inside the thermal enclosure 120. Additionally or alternatively, at least one of the thermal protection features may be outside the thermal enclosure 120. At least one of the thermal protection features may be a cooling feature. The thermal protection features in this case may comprise elements for cooling or ventilating the compression device 118, preferably for cooling or ventilating an internal portion of the compression device 118. At least one of the one or more thermal protection features may be a thermal insulation feature. The one or more thermal protection features in this case may facilitate insulating the sensor 112 from the inside of the thermal enclosure 120.

### Description of the compression function

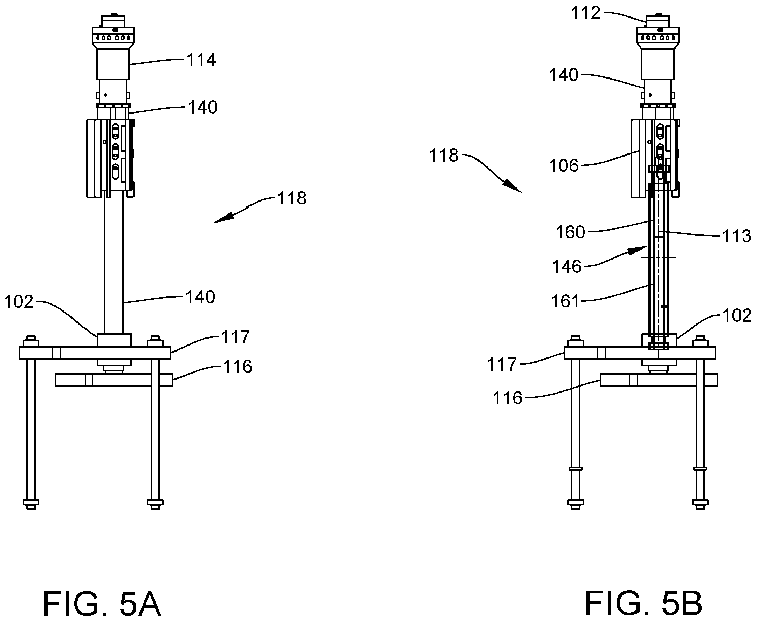

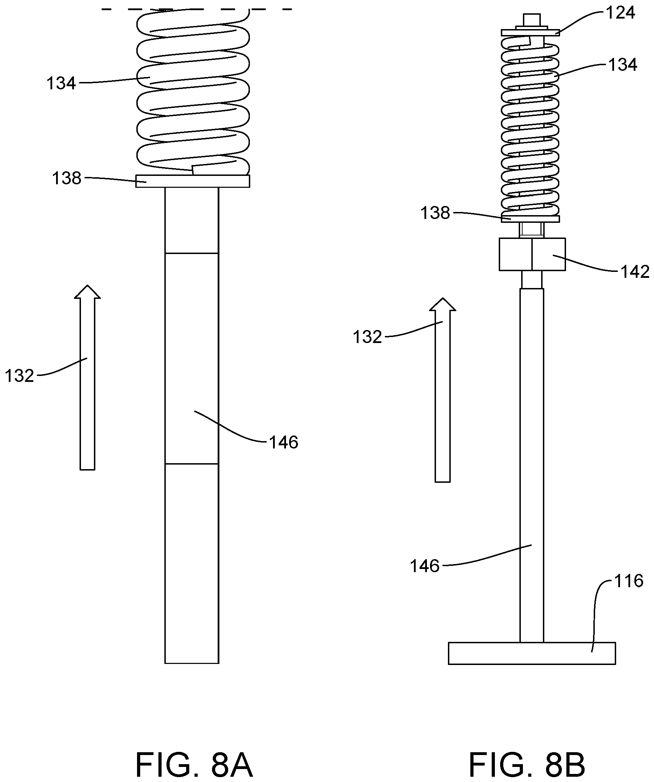

Making reference to FIG. 5A, FIG. 5B, FIG. 8A and FIG. 8B each compression device 118 may be elongated along a main axis 113 which is perpendicular to the planar surfaces of the cells 101. Along this main axis, the term "*distal*" refers to the orientation towards the stack 100 (illustrated by the arrow 105 on FIG. 3), and the term "*proximal*" refers to the orientation away from the stack 100 (direction opposite to the arrow 105).

The compression device 118 may comprise a housing 140 enclosing a mechanical pusher 146 and a biasing member 134. The mechanical pusher 146 may extend along the main axis 113 and may be slidable within the housing 140 along this main axis 113. The mechanical pusher 146 and the housing 140 may have a generally cylindrical (respectively, tubular) shape along the main axis 113. The mechanical pusher 146 may be positioned distally relative to the biasing member 134. The biasing member 134 may be configured for biasing the mechanical pusher 146 towards the stack 100. A disk element 138 may be provided at the interface between the biasing member 134 and the mechanical pusher 146, in order to make sure that the biasing force exerted by the biasing member 134 is transmitted to the mechanical pusher 146.

Preferably, the biasing member 134 may be configured for biasing the housing 140 away from the stack 100. In other terms, the biasing member 134 may press on the mechanical pusher 146 in the distal direction, while exerting a force on the housing 140 in the proximal direction.

The biasing member 134 may be partly or preferably fully outside of the thermal enclosure 120. The mechanical pusher 146 may be fully inside the thermal enclosure 120, or preferably only partly inside the thermal enclosure 120.

The compression device 118 may be mounted to a compression plate 116. More specifically, the distal end of the mechanical pusher 146 may bear against the compression plate 116, the compression plate 116 being configured to transfer and distribute the compressive force (along the arrow 105) from the mechanical pusher 146 to the stack 100. As the compression device 118 applies a compressive force to the stack 100, the contact between the mechanical pusher 146 and the compression plate 116 can allow for a homogenous repartition of the force from the mechanical pusher 146 to the stack 100, i.e. a substantially equal distribution of the force across the stack 100, enabling a more effective contact between each respective cell 101 of the stack 100 as they are compressed.

The compression device 118 may be mounted on a frame fixedly arranged in the system. The frame may include a pulling plate 117, a base plate 107 and struts 103 as will be described in more detail below. The frame may have any configuration that allows it to remain in a fixed position within the system, especially relative to the stack. For instance it could consist of a plate only that is fixed within the thermal enclosure via any appropriate means.

In the exemplary embodiment described below, the base plate 107 may be provided on the other side of the stack 100, relative to the compression plate 116. The stack may thus be sandwiched and compressed between the compression plate 116 and the base plate 107.

The compression device 118 may further be fixedly mounted to the pulling plate 117, preferably via the housing 140. The pulling plate may be fixedly connected to the base plate 107, preferably by one or more struts 103 which may for example be positioned around the stack 100 as shown on FIG. 3.

The pulling plate may allow for the recovery of the forces generated by the biasing member 134 and mechanical pusher 146 and transmitted in the opposite direction through the base plate 107 and struts 103. The forces may in this case be further transmitted to the housing 140 which is attached to the pulling plate 117.

Both the compression plate 116 and the pulling plate 117 (as well as the base plate 107) may be in the thermal enclosure 120.

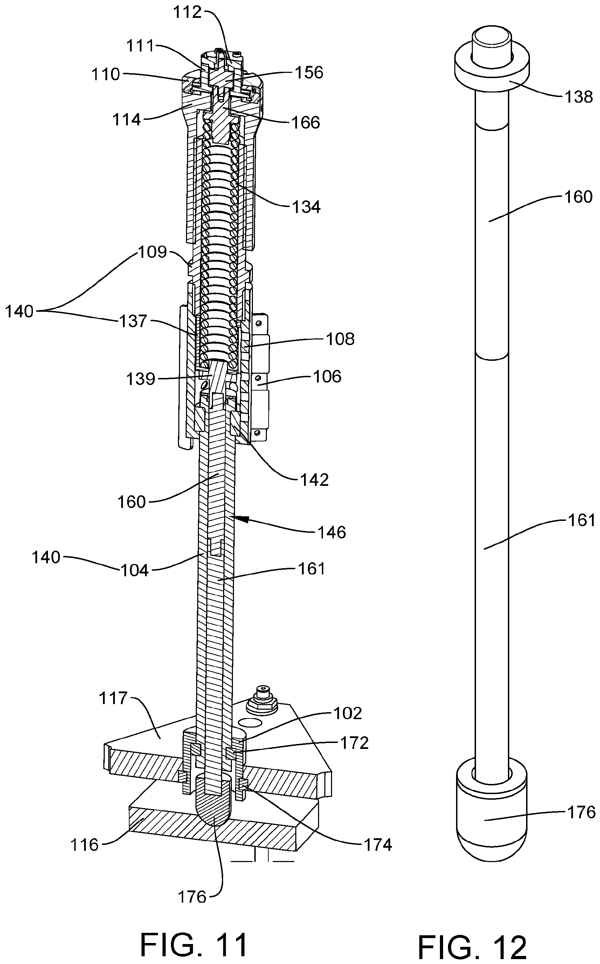

Both the compression plate 116 and the pulling plate 117 may be on the same side of the stack 100 (while the base plate 107 is on the other side of the stack 100). For example, the compression plate 116 may be positioned distally relative to the pulling plate 117 (i.e. the compression plate 116 may be between the stack 100 and the pulling plate 117). A gap may be provided between the pulling plate 117 and the compression plate 116. A through hole may be provided in the pulling plate 117 so that the compression device 118 may extend through this through hole and down to the compression plate 117, as shown in FIG. 11.

The compression plate 116, pulling plate 117 and base plate 107 may be of any shape, such as a triangular shape, square shape, rectangular shape, circular shape or other. The pulling plate 117, in the illustrated example, may be of a triangular shape.

A distal end component 176 may be provided at an interface between the mechanical pusher 146 and the compression plate 116 a shown on FIG. 11. The distal end component 176 may be accommodated into a recess in the compression plate 116, the recess guiding the mechanical pusher 146 and thereby facilitating correctly applying (and in particular orienting) the force to the stack 100. For example, the distal end component 176 may have a convex surface, such as a rounded surface, engaged with a concave surface in a recess in the compression plate 116. The distal end component 176 may also comprise a notch for accommodating the distal end of the mechanical pusher 146. The mechanical pusher 146 may apply the compressive force to the compression plate 116 *via* the distal end component 176.

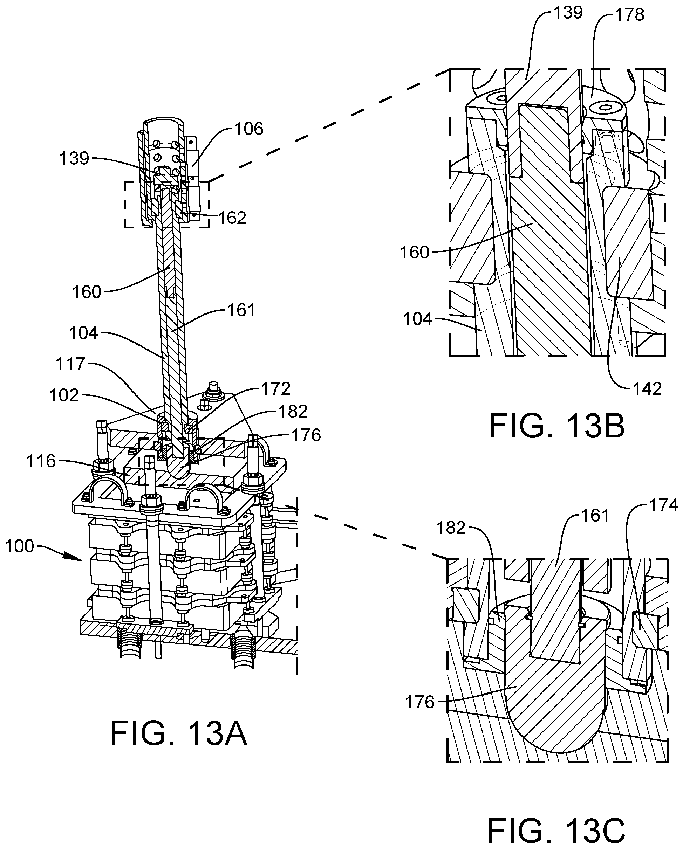

An anchoring piece 102 may be provided to fixedly connect the housing 140 of the compression device 118 to the pulling plate 117. The anchoring piece 102 may be an annular piece fixed within the through hole of the pulling plate 117. The outer periphery of the housing 140 may be at least partly inserted within the anchoring piece 102 and fixed thereto. The anchoring piece 102 may for example be fixed to the pulling plate 117 *via* a locking ring or bearing 174 inserted between the pulling plate 117 and the anchoring piece 102 as shown on FIG. 13C.

A stopper ring 172 may be present between the anchoring piece 102 and the housing 140, as illustrated on FIG. 13A. This stopper ring 172 may be positioned in a circumferential groove on an exterior surface of the housing 140. The stopper ring 172 may be made of two half rings which are assembled around the housing 140. The anchoring piece 102 may be slid onto the housing 140 from the proximal end and abut on the stopper ring 172. Once the assembling is complete, and in use, a pulling force (oriented opposite to the compressive force) acts on the housing 140 and the housing 140 is maintained in a fixed position relative to the anchoring piece 102 owing to the abutment on the stopper ring 172.

A centering tool 182 is visible on FIG. 13C. The centering tool 182 may be an annular tool comprised of two semi-annular elements interfaced between the distal end component 176 and the anchoring piece 102. This centering tool 182 may be removed once the assembling of the compression device 118 is complete.

The biasing member 134 may be in the form of a compression spring. The biasing member 134 may bear against the mechanical pusher 146 at a proximal end thereof. In the illustrated embodiment (see in particular FIG. 11), the mechanical pusher 146 comprises a first (distal) portion 161, a second (middle) portion 160, which will be described in more detail below, as well as a third (proximal) portion 139. This third portion 139 is an interface element between the biasing member 134 and the rest of the mechanical pusher 146, which transmits the compressive force from the biasing member 134 to the mechanical pusher 146. The third portion 139 can comprise a (e.g. central) radially extending flange perpendicular to the main axis, on which the coil of the compression spring can bear. The distal end of the third portion 139 and the proximal end of the second portion 160 may mate together. For example, as illustrated, the distal end of the third portion 139 may comprise a recess in which a protrusion at the proximal end of the second portion 160 may be inserted - the opposite being of course also possible.

A nut 114 may be mounted on a proximal end of the housing 140. The nut may be configured for adjusting the compressive force exerted by the biasing member 134 on the mechanical pusher 146 (preferably, manually). The nut may be threadedly engaged with an outer surface of the housing 140. As a result, the nut 114 may be helically movable along the main axis relative to the main housing 140. The biasing member 134 may press against the nut in the proximal direction. Therefore, when the nut 114 is rotated (such as manually rotated): either it is screwed distally, so that the compression force exerted by the biasing member 134 increases; or it is screwed proximally, so that the compression force exerted by the biasing member 134 decreases.

The housing 140 may comprise several parts, which may be fixed together. As illustrated, the housing 140 may comprise a distal part 104 surrounding the mechanical pusher 146 (this distal part 104 may be fixedly engaged with the pulling plate 117 *via* the anchoring piece 102); and a proximal part 109 surrounding the biasing member 134. The nut 114 may be threadedly engaged with the proximal part 109. The housing 140 may also comprise an interconnecting part 137 which may interconnect the distal part 104 with the proximal part 109. For example, as illustrated, the interconnecting part 137 may be connected at a proximal end of the distal part 104 and at a distal end of the proximal part 109. The interconnecting part 137 may surround a portion of both the distal part 104 and proximal part 109. The interconnecting part 137 may enclose a distal end of the biasing member 134 and a proximal end of the mechanical pusher 146 (e.g. the above-described third portion 139 as well as optionally a proximal length of the above-described second portion 160 of the mechanical pusher 146).

The biasing member 134 (preferably the compression spring) may be prestressed in the compression device, preferably before the thermal enclosure starts to heat up. By way of example, the biasing member 134 may be prestressed with a force ranging between 3000 and 6000 N, for example between 4000 and 5000 N. Once the thermal enclosure has reached its operating temperature, for example between 700 and 900°C, such as 800°C, the compressive force applied by the biasing member 134 may be reduced due to thermal dilatation. It may range for example between 3500 and 4500 N.

### Description of the sensor

A sensor 112 is provided at a proximal end of the compression device 118 (outside the thermal enclosure 120), for sensing the compression force applied to the stack 100. The sensor 112 may be a mechanical sensor.

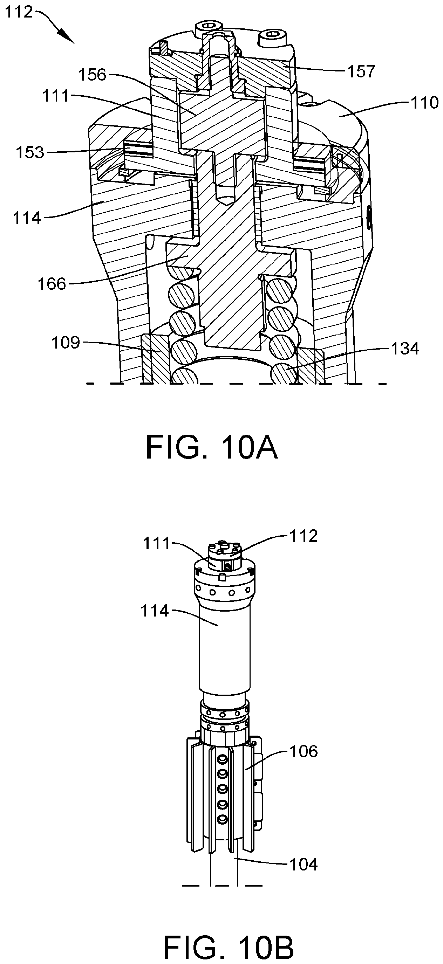

The sensor 112, as can be seen in FIG. 10A and FIG. 10B, may sit upon a sensor base housing 110. The sensor base housing 110 may be fixedly mounted at the proximal end of the nut 114. The nut 114 is preferably fully outside the thermal enclosure 120.

The sensor may comprise a sensor cover 157 and a sensing component 156. The sensing component 156 may be surrounded by a peripheral sensor wall 111. The sensing component 156 may in contact with a bearing 166. The sensor cover 157 may be placed proximally relative to the sensing component 156, while the bearing 166 may be placed distally. The peripheral sensor wall 111 may have an annular shape and surround the sensing component 156.

The bearing 166 may be at an interface between the biasing member 134 and the sensor 112. For example, the bearing 166 may comprise a (e.g. central) radially extending flange (or alternatively, radially extending arms) upon which the coils of the compression spring may bear. The biasing member 134 thus biases the bearing 166 proximally. The applied force is transmitted to the sensor 112. For example, the sensing element 156 may mate with the bearing 166. As illustrated, a distal protrusion of the sensing element 156 may be inserted in a mating proximal recess in the bearing 166.

On the other (proximal) side of the sensing element 156, the sensing element 156 may be fixed to the sensor cover 157, which is itself fixed to the peripheral sensor wall 111. The peripheral sensor wall 111 may comprise a radially extending flange, preferably at a distal end thereof. The sensor base housing 110 may have an annular shape and may partly surround the peripheral sensor wall 111. The peripheral sensor wall 111 may be secured against axial movement relative to the sensor base housing 110, but may be freely rotatable relative to the sensor base housing 110. This can be accomplished using a dedicated interface between the sensor base housing 110 and peripheral sensor wall 111, such as a rolling bearing 153 (or thrust bearing). The rolling bearing 153 can be sandwiched between the sensor base housing 110 (on the proximal side) and the flange of the peripheral sensor wall 111 (distal side). Therefore, when the nut 114 is rotated, the sensor base housing 110 rotates as well, but the sensor 112 itself does not rotate. This prevents any damage to the sensor's electrical wiring by twisting (not shown on the drawings).

The sensor 112 and in particular the sensing element 156 senses the force applied between the biasing member 134 and the sensor base housing 110 / nut 113 / housing 140.

### Description of the thermal protection features

The thermal protection features may include thermal insulation and/or cooling features. By *"thermal protection feature"* is meant any element having a function of preventing transmission of excessive heat from the inside of the thermal enclosure 120 to the sensor 112. This prevention may be effected through a specific geometric shape and/or through a specific choice of material.

Thermal insulation features may include one or more elements, in particular element of the compression device 118, made of a material having low thermal conductivity, such as a ceramic material. By way of example, the material having low thermal conductivity may have a thermal conductivity at 20°C of less than 10 Wm⁻¹K⁻¹, preferably less than 5 Wm⁻¹K⁻¹ more preferably less than 3 Wm⁻¹K⁻¹ or less than 2 Wm⁻¹K⁻¹. By way of example, the thermal conductivity at 20°C may be from 0.5 to 10 Wm⁻¹K⁻¹, preferably from 1 to 5 Wm⁻¹K⁻¹, more preferably from 1 to 3 Wm⁻¹K⁻¹ and even more preferably from 1.5 to 2 Wm⁻¹K⁻¹.

Thermal conductivity may be measured according to ASTM C1470-20.

In addition to the low thermal conductivity, the material preferably withstands a temperature of up to 1000°C.

Cooling features may preferably include passive cooling features, in particular for facilitating the natural convection of air within the compression device 118.

As a first example of a thermal insulation feature, at least a portion of a mechanical pusher 146 of the compression device 118 may be made of a material having low thermal conductivity and high mechanical resistance, such as a ceramic material.

Preferably, the mechanical pusher 146 comprises a first (distal) portion 161 and a second (middle) portion 160 as already indicated above and as illustrated in FIG. 12. The first portion 161 may be made of a metal (including an alloy, such as an austenitic nickel-chrome superalloy, for example of the Inconel^{®} brand). The second portion 160 may be made of a ceramic material. The second portion 160 may be made of material having low thermal conductivity, as described above..

The distal end of the second portion 160 may bear against the proximal end of the first portion 161. The distal end of the second portion 160 may mate with the proximal end of the first portion 161. For example, as illustrated, the proximal end of the first portion 161 may comprise a recess in which a protrusion at the proximal end of the second portion 160 may be inserted - the opposite being of course also possible. The portions may be maintained assembled in compression. The second portion 160 may be positioned through the wall of the thermal enclosure 120. Alternatively, the first portion 161 may be positioned through the wall of the thermal enclosure 120. The first portion 161 may be of a length (along the main axis) longer than that of the second portion 160.

The second portion 160 may significantly block the conduction of heat from the inside of the thermal enclosure 120 to the biasing member 134 and ultimately to the sensor 112.

In addition to the low thermal conductivity already described above, the material of the second portion 160 preferably has high mechanical resistance since it is subjected to high compressive force. By way of example, this material may have a resistance to compression of at least 200 MPa, or at least 300 MPa, or at least 400 MPa (such as from 200 to 1000 MPa, or from 400 to 800 MPa, or from 450 to 600 MPa). This material may have a resistance to flexion of at least 50 MPa, or at least 70 MPa, or at least 90 MPa (such as from 50 to 250 MPa, or from 70 to 200 MPa, or from 90 to 150 MPa). This material may have an elastic modulus (Young's modulus) at 20 °C of at least 20 GPa, or at least 40 GPa, or at least 60 GPa (for example from 20 to 120 GPa, or from 40 to 100 GPa, or from 60 to 80 GPa).

These mechanical properties may for example be measured according to ISO 2768-MK.

Vitro800 is an example of a commercial ceramic material (marketed by Final Advanced Materials) which may be used for the second portion 160.

As a second example of a thermal insulation feature, one or more thermally insulating rings may be provided in the compression device 118. The one or more thermally insulated rings may act as thermal bridge breakers.

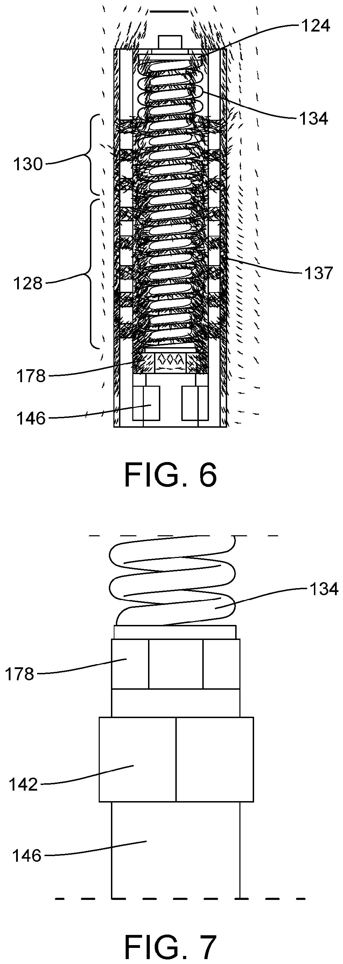

In one configuration, the compression device 118 may comprise at least one heat breaker ring 142 around the housing 140, preferably positioned outside the thermal enclosure 120. An example of a heat breaker ring 142 can be seen in FIG. 7, FIG. 8B and FIG. 11.

The heat breaker ring 142 may have a thermal conductivity within the ranges described above. The heat breaker ring 142 may be made of a ceramic material. The heat breaker ring 142 may be positioned in a circumferential groove on an exterior surface of the housing 140. The heat breaker ring 142 may be made of two half rings which are assembled within the circumferential groove. The heat breaker ring 142 may in particular be positioned around the distal part 104 of the housing 140, more preferably close to the proximal end of this distal part 104. The heat breaker ring may radially protrude from the circumferential groove. The heat breaker ring 142 may surround the second portion 160 of the mechanical pusher 146 (with the housing in-between).

The housing 140 (and in particular the distal part 104) may be made of a material such as a metal, including an alloy, such as an austenitic nickel-chrome superalloy, for example of the Inconel^{®} brand. Generally, the housing 140 (and in particular the distal part 104) is not made of a ceramic material. The choice of material for the housing 140 (and in particular the distal part 104) may be primarily dictated by a desired mechanical performance in traction. This generally implies that the housing 140 (and in particular the distal part 104) has a higher thermal conductivity than the low thermal conductivity materials mentioned above.

Owing to the circumferential groove, the housing 140 may have a reduced thickness in the area where the heat breaker ring 142 is present, which limits the transmission of heat by conduction from the thermal enclosure 120 to the sensor 112 *via* the housing.

The stopper ring 172 described above may also be a heat breaker ring (alternatively or additionally) present in the system, between the anchoring piece 102 and the housing 140 (in particular the distal part 104), as illustrated on FIG. 13A. Thus, the stopper ring 172 may have a thermal conductivity within the ranges described above. The stopper ring 172 may be made of a ceramic material. As the stopper ring 172 is preferably positioned in a circumferential groove in the housing 140, the housing 140 may have a reduced thickness in the area where the stopper ring 172 is present, which limits the transmission of heat by conduction.

As a third example of a thermal insulation feature, one or more sealing members may be provided in the compression device 118. The one or more sealing members may act to prevent or reduce the flow of hot air within the compression device towards the sensor 112. The one or more sealing members may in particular be positioned within the housing 140.

One sealing member in particular may be a sealing ring 178 as shown in FIG. 7 and FIG. 13B. As illustrated, this sealing ring 178 may be provided at a proximal end of the first (distal) part 104 of the housing. The sealing ring 178 may comprise an annular portion inserted between the housing 140 and the mechanical pusher 146, for example between the first part 104 of the housing and the third portion 139 of the mechanical pusher 146. It may also have a radially extending flange covering the proximal end of the first part 104 of the housing 140. The sealing ring 178 may for example be made of a ceramic material or of a metal (including an alloy). Preferably, the sealing ring 178 has a low thermal conductivity within the ranges described above.

As a fourth example of thermal insulation features, the system may comprise a thermally insulating material as a thermal seal in the opening of the thermal enclosure around the compression device, in order to reduce heat loss from the thermal enclosure. The thermally insulating material may be a ceramic wool (i.e. wool with a very low thermal conductivity and which can withstand temperature up to 1000°C). The thermally insulating material may have a thermal conductivity at 800°C of less than 0.5 Wm⁻¹K⁻¹, preferably of less than 0.2 Wm⁻¹K⁻¹, more preferably of less than 0.1 Wm⁻¹K⁻¹, most preferably of less than 0.04 Wm⁻¹K⁻¹.

As a fifth example of thermal insulation features, the system may comprise a thermal insulation feature at the interface between the mechanical pusher 146 and the compression plate 116 so as to break the heat conduction path at this junction. This can be achieved, for example, by providing a low thermal conductivity material (as defined above) between the mechanical pusher 146 and the compression plate 116. The distal end component 176 described above may act as such a thermal insulation feature. Additionally or alternatively, this can be achieved by machining the compression plate 116 so as to create a relatively high roughness surface. Providing high roughness on the surface may ensure continued optimal mechanical function while mitigating thermal conduction from the stack 100 to the mechanical pusher 146. By way of example, the roughness Ra of the surface of the compression plate 116 can range from 1.6 to 3.2 µm. The roughness Ra may be measured in accordance with ISO 4287:2000.

Turning to the cooling features, these may comprise ventilation holes and/or a heat sink, positioned outside the thermal enclosure 120. These cooling features may assist in cooling the compression device 118 by ambient air.

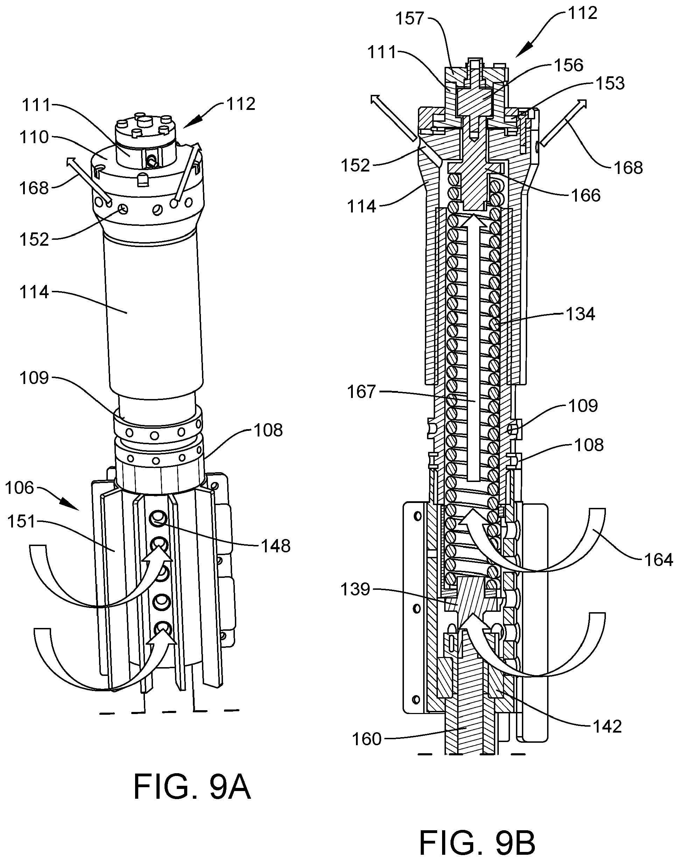

In particular, the housing 140 and/or the nut 113 may comprise ventilation holes. In particular, the second (proximal) part 109 of the housing may comprise ventilation holes; and/or the interconnecting part 137 of the housing may comprise ventilation holes; and/or the nut 114 may comprise ventilation holes. For example, the ventilation holes may comprise one or more inlets 148 and one or more outlets 152. The outlets 152 may for example be located proximal relative to the inlets 148. Therefore, air may enter the housing at one or more distal positions (see the arrows 164 on FIG. 9B), flow towards the proximal end (see the arrow 167 on the same drawing), thereby cooling the biasing member and the housing, and exit out at a proximal end (see the arrow 168 on FIG. 9A) - by natural convection.

For example, the interconnecting part 137 may comprise a plurality of inlets 148 and the nut 114 may comprise a plurality of outlets 152. As can be seen in FIG. 9B, the nut outlets 152 may be provided at an angle or slant inside the nut. Additionally or alternatively, the nut ventilation holes 152 may be perpendicular to the main axis 113.

Alternatively or additionally, the housing 140, in particular the interconnecting part 137, may comprise a plurality of ventilation holes 148 longitudinally spaced along the main axis. Air may enter the housing *via* some of these holes 128, flow along the main axis, and exit the housing *via* other holes 130, thus also ensuring the cooling function. A model of such ventilation within the interconnecting part 137 of the housing can be seen on FIG. 6. Optionally, a sealing ring 124 may be provided within the housing proximal to the ventilation holes 128, 130 in the interconnecting part 137, to prevent relatively hot air from flowing further proximally.

A heat sink may be provided around the housing, outside the thermal enclosure. The heat sink may be in the form of fins or elongated arms directly protruding from a wall of the housing. Alternatively, for the sake of simplicity, the heat sink may be present on a cover sleeve fit around a portion of the housing.

For example, as illustrated in FIG. 9A, FIG. 9B and FIG. 10B, the compression device 118 may comprise a cover sleeve 108 fixed around the housing 140, outside of the thermal enclosure. The cover sleeve 108 may for example be made of a metal, for example aluminum. The cover sleeve 108 may be fit around the interconnecting part 137 of the housing.

In case the interconnecting part 137 comprises ventilation holes, the cover sleeve 108 may comprise holes aligned with these ventilation holes so that they are not obstructed by the cover sleeve 108.

The cover sleeve 108 may comprise a heat sink 106, preferably in the form of a plurality of fins 151. The fins 151 can for example extend along the main axis and be circumferentially arranged on the cover sleeve 108. Alternatively, the fins could also be in the form of circumferential flanges, longitudinally spaced apart. Other protruding features such as arms or the like can also be used for the heat sink 106. The heat sink 106 can facilitate the transfer of heat from the thermal enclosure to the environment. The fins 151 may preferably be made of metal, for example aluminum, and may be welded or soldered to the cover sleeve 108. The fins are preferably made of a high thermal conductivity material (the thermal conductivity is preferably more than 50 Wm⁻¹K⁻¹, more preferably more than 100 Wm⁻¹K⁻¹) so as to facilitate heat conduction through the fins and cooling by the surrounding air.

Holes may be present between the fins. In the illustrated configuration, a line of holes (e.g. 5 or 6 holes) aligned along the main axis is provided between every pair of adjacent fins, corresponding to similar ventilation holes in the interconnecting part 137.

Instead of providing a cover sleeve fixed to the interconnecting part, a unitary member may be provided (*i.e*. for example the heat sink, *e.g*. fins, may be directly fixed to the interconnecting part), the geometry being otherwise similar to what has been described above.

Various surface treatments may be provided to further reduce the transfer of heat from the thermal enclosure to the sensor. For example, some or all components of the system (and in particular of the compression device) may receive a surface treatment so as to reduce their emissivity. A low emissivity property can advantageously allow for reducing the heat transfer between the different parts by radiation, which is likely to occur between components subjected to high temperatures. For example, the surface treatment may comprise a polishing step. The surface treatment may comprise providing a coating or paint, such as a metal coating. The metal coating may have a thickness from 1 to 10 µm. In some preferred embodiments, emissivity at a temperature of 500°C may be reduced by a factor of 2 to 10, for example by a factor of 3 to 5, due to the surface treatment.

In view of the one or more thermal protection features described above, the sensor may be maintained and may operate at a temperature of less than 200°C, preferably less than 150°C or even less than 100°C. Exemplary ranges of temperature operation for the sensor are from 50 to 200°C, preferably from 70 to 150°C.

The arrows 132 indicate the general direction of heat flow throughout the compression device 118 in FIG. 8A and FIG. 8B. These drawings show a numerical simulation of the temperature gradient across the mechanical pusher 146 and biasing member 134.

## Claims

1. A system comprising:
- a thermal enclosure (120);
- at least one stack (100) comprising at least one electrochemical cell (101), the at least one stack being (100) inside the thermal enclosure (120);
- at least one compression device (118) for applying a compressive force to each respective stack (100), the compression device (188) positioned through an opening of a wall of the thermal enclosure (120) and comprising a first part outside the thermal enclosure (120) and a second part inside the thermal enclosure (120);
- at least one sensor (112) for sensing the compression force applied to each respective stack (100), the at least one sensor (112) being attached to the first part of the respective compression device (118);
- optionally, one or more thermal protection features located along each respective compression device (118), between each respective sensor (112) and stack (100).

2. The system according to claim 1, wherein the compression device (118) comprises:
- a mechanical pusher (146);
- a biasing member (134) configured for biasing the mechanical pusher (146) towards the stack (100);
- a housing (140) positioned through the thermal enclosure (120) and containing the mechanical pusher (146) and the biasing member (134);
- optionally, a nut (114) positioned outside the thermal enclosure (120) and mounted on a proximal end of the housing (140), configured for adjusting the biasing exerted by the biasing member (134) on the mechanical pusher (146).

3. The system according to claim 2, wherein at least a portion of the mechanical pusher (146) is made of a ceramic material; and/or wherein the mechanical pusher (146) comprises a first portion (161) closer to the stack (100) and a second portion (160) farther from the stack (100), the second portion (160) having a lower thermal conductivity than the first portion (161), wherein preferably the second portion (160) is made of a ceramic material and the first portion (161) is made of a metal.

4. The system according to claim 2 or 3, wherein one or more ventilation holes (128, 130, 148) are provided in the housing (140) outside the thermal enclosure (120).

5. The system according to any one of claims 2 to 4, wherein the compression device (118) comprises a cover sleeve (108) fixed around the housing (140) outside of the thermal enclosure (120), the cover sleeve (108) comprising a heat sink (106) preferably in the form of a plurality of fins, wherein, optionally, the cover sleeve (108) comprises ventilation holes aligned with corresponding ventilation holes (128, 130, 148) provided in the housing (140).

6. The system according to any one of claims 2 to 5, wherein the nut (114) comprises ventilation holes (152).

7. The system according to any one of claims 2 to 6, wherein the compression device (118) comprises a heat breaker ring (142) around the housing (140) and optionally within the cover sleeve (108), if present; the heat breaker ring (142) being preferably made of a ceramic material, the heat breaker ring (142) being positioned preferably in a circumferential groove on the housing (140), distal to the biasing member (134).

8. The system according to any one of claims 2 to 7, wherein the housing (140) comprises a distal part (104) surrounding the mechanical pusher (146) and a proximal part (109) surrounding the biasing member (134), the compression device (118) preferably comprising at least one sealing ring (178) positioned at the proximal end of the distal part (104) of the housing.

9. The system according to any one of claims 2 to 8, wherein the compression device (118) is mounted to a compression plate (116) at a distal end of the mechanical pusher (146), the compression plate (116) being configured to transfer and distribute the compressive force from the mechanical pusher (146) to the stack (100).

10. The system according to claim 9, wherein the compression device (118) is further mounted to a pulling plate (117), the pulling plate (117) comprising a hole for passage of the compression device (118) and an anchoring piece (102) positioned in the hole and around the housing (140) and fixed thereto, the system optionally further comprising a heat breaker ring (172) between the housing (140) and the anchoring piece (102).

11. The system according to any one of claims 1 to 10, wherein the system comprises ceramic wool in the opening of the thermal enclosure (120) around the compression device (118).

12. The system according to any one of claims 1 to 11, wherein the stack (100) comprises a plurality of electrochemical cells (101) along a stacking direction, and wherein the compressive force is applied along the stacking direction.

13. A method for carrying out an electrochemical reaction in the system of any one of claims 1 to 12, the method comprising:
- applying a compressive force to the stack (100) using the compression device (118);
- monitoring the compressive force using the sensor (112);
- if necessary, adjusting the compressive force.

14. The method of claim 13, wherein the stack (100) is at an average temperature from 500 to 1000°C, preferably from 650 to 850°C, and the sensor (112) is at a temperature of less than 200°C, preferably less than 150°C.

15. The method of claim 13 or 14, for the generation of hydrogen by water electrolysis or the generation of electricity by hydrogen oxidation and oxygen reduction.
